# EUROPEAN PATENT SPECIFICATION

(11) **EP 3 486 176 B1**
(45) Date of publication and mention of the grant of the patent: **05.01.2022**
(21) Application number: 17382776.7
(22) Date of filing: 15.11.2017
(51) Int. Cl.: B64D 39/06, B65H 54/28, F16C 29/00, F16C 29/04

(54) **SERVICE CARRIAGE SYSTEM WITH ROLLING-ELEMENT BEARING**
SERVICEWAGENSYSTEM MIT KUGEL- BZW. ROLLENLAGER
SYSTÈME DE CHARIOT DE SERVICE AVEC ÉLÉMENTS ROULANTS

(43) Date of publication of application: 22.05.2019
(73) Proprietor: Airbus Defence and Space, S.A.U., 28906 Getafe - Madrid (ES)
(72) Inventor: ESPINOSA-SANCHEZ, Martin, 28906 Getafe (Madrid) (ES); VALDEOLMOS TRABA, Javier, 28906 Getafe (Madrid) (ES)
(74) Representative: Elzaburu S.L.P.

(56) References cited:
- EP-A1- 0 054 961
- EP-A1- 0 311 784
- JP-B2- 4 409 495
- US-A- 3 980 252

## Description

### Field of the invention

The invention is related to a service carriage system for lateral hose guidance configured to reduce the friction among its constituent elements. The invention could be applied to air to air refueling (AAR) operations when a hose and drogue system is employed.

### Background of the invention

Hose and drogue refueling systems consist of a drum for winding/unwinding the hose during the system operation. Typically, several layers are required to wrap the hose in the drum. Due to the internal construction of the hose, which provides high rigidity, an auxiliary system is required to laterally guide the hose for a proper winding/unwinding in the drum. This system is called service carriage.

The service carriage system is typically geared to the drum. The movement of both is synchronized by a series of gears. The service carriage follows the hose movement with a linear displacement, changing direction at the end of each hose layer by an Archimedean shaft.

The Archimedean shaft comprises two spiral-shaped guides in its surface, i.e. each guide has a spiral shape along the longitudinal axis of the shaft. Each spiral defines the service carriage movement in one direction. The design produces crosses between both spirals, so the guide is not continuous as at the crossings, an opening into the guide is performed for the crossing of the other guide.

The service carriage follows these guides through a pin, which allocated within the spiral shaped guides of the Archimedean shaft, pushing laterally the service carriage. In order to follow the spiral in which the pin is allocated at the crossings, the pin is shaped like a shark fin.

The known system has the disadvantage that the pin wears in its movement within the spiral guide. This requires changing the pin from time to time because in the movement of the serviced carriage, friction occurs between the spiral guide and the pin and this friction causes the pin wear.

The pin wear down during air-to-air refueling operations has occasionally caused the hose blockage and the impossibility to rewind the hose, forcing the tanker to land in emergency with the hose trailed.

It is known document US3980252 disclosing an improved spooling device having a drive shaft defining a track including conventional douple helices which are connected at their ends by parts of the track having any suitable curved or straight contour. An assembly on the drive shaft is made to reciprocate by engagement with the track for guiding a rope to and from a drum. The assembly includes two pivotal followers and a fixed center follower. When the assembly is moving axially in one direction, the pivotal followers are engaged in one helix and are in respective first positions. Then, when the assembly is returning in the opposite axial direction the followers are guided by the other helix and the pivotal followers are in respective second positions. Consequently the fixed follower and one of the pivotal followers take the load when the assembly is being moved in one direction whereas the fixed follower and the other of the pivotal followers take the load when moving the assembly in the opposite direction.

It is also known document JP4409495 disclosing a traverser provided in a wire winding device to wind a wire uniformly as the small and compact traverser having durability. A traverser block to which a guide member for guiding the wire to be wound is attached is arranged in this traverser, and two cylindrical cam shafts are fitted into the traverser block. Reciprocating spiral cam grooves formed on the cylindrical cam shafts have different leads, and steel balls being driven pieces are fitted into the cam grooves. Each cylindrical cam shaft is driven at rotational speed being inverse proportion to the leads of the reciprocating spiral cam grooves to feed the steel balls at equal speed and reciprocate the traverser block in the axial direction. Since a crossing part of the reciprocating spiral cam grooves is deviated in the axial direction and length in the direction of cam groove of the steel ball is short, diameter of the cylindrical cam shaft can be reduced and accurate feeding of the steel ball up to both end parts can be achieved.

It is also known document EP0311784 disclosing a winding apparatus for yarn, in which the yarn is reversingly reciprocated by a traversing means, the traversing means being braked by an energy storing means at each reversal of motion for recovering the kinetic energy, and the energy storing means retransmitting the stored energy to the traversing means for accelerating its return motion. The energy storing means consist of movable masses which in each area of motion reversal cooperate with a stop acting as a gear mechanism, by which it is achieved that the kinetic energy is stored and retransmitted without the kind of energy being changed.

It is also known document EP0054961 disclosing an apparatus for winding continuous elongate elements and of the type comprising a scroll cam which is rotatably supported at its ends and whose cylindrical outer surface is formed with an endless helical cam groove consisting of at least one pair of right- and left-handed helical grooves which merge into each other at each of the end portions of the cam. A continuous elongate element guide which has a cam follower fitted into the endless helical cam groove of the scroll cam and which is disposed for a reciprocal movement in parallel with the axis of the cam, and the lead angle of the cam groove over a predetermined distance from the turning point of motion. That is, the point at which the right- and left-hand grooves merge, being increased symmetrically both in the downstream and upstream directions with respect to the turning point so that the motion of the cam follower can be accelerated in the vicinity of the turning point at each of the ends of the cam; the cam follower consists of a cylindrical portion and a ship-shaped portion, and the cross section of the cam groove is so determined that the cam groove guides only the ship-shaped portion of the cam follower almost over the whole length of the cam groove except a predetermined distance in the vicinity of each of the turning point where only the cylindrical portion of the cam follower is securely guided by the cam groove while the ship-shaped portion thereof is released from the cam groove. Therefore, the cam follower can smoothly cross the junctures of the cam groove and can be securely guided by the engagement of the cylindrical portion thereof with the cam groove when it is accelerated at each of the ends of the reciprocal motion.

### Summary of the invention

The present invention is directed to solve the pin wear problem. To reduce wear, a mechanical design based on rolling between the different parts of the carriage system is proposed.

According to the present invention, the aforementioned problems are solved by a frictionless service carriage system for lateral hose guidance according to claim 1.

Preferred embodiments of the present invention are laid down in the dependent claims.

Therefore, according to the present invention, the known pin is replaced by a set of rolling elements. The advantage of having a set of rolling elements is that it prevents the carriage from changing from one spiral into the other at the crosses between both spirals. The whole set rotates freely in the axial direction of the shaft.

The set of rolling elements rolls over the same spiral and is also configured such that in every crossing of the two spiral-shaped guides, the set has at least two contact points with the spiral-shaped guide in which the set is rolling thus avoiding the set of rolling elements from going into the other spiral.

### Description of the figures

To complete the description and in order to provide for a better understanding of the invention, a set of drawings is provided. Said drawings form an integral part of the description and illustrate preferred embodiments of the invention. The drawings comprise the following figures.

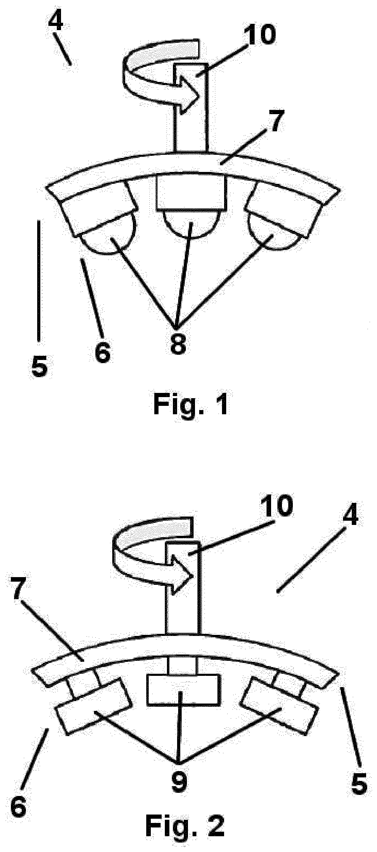

Figure 1 shows a schematic front view of a first embodiment of the movable elements having a set of rolling elements, specifically three balls.
Figure 2 shows a schematic front view of a second embodiment of the movable element having a set of rolling elements, specifically three bearings having a cylindrical shape.
Figure 3 shows a guide having a semicircular cross section adapted for the rolling of set of rolling elements shown in figure 1.
Figure 4 shows a guide having a rectangular cross section adapted for the rolling of set of rolling elements shown in figure 2.
Figure 5 shows the transition between both spirals at the end of the shaft.

### Detailed description of the invention

The accompanying figures represents two embodiments for the set of rolling elements (6), one based on the use of balls (8) and another based on the use of bearings (9) having a cylindrical shape and configured to roll around its longudinal axis.

The balls (8) offer a better rolling as there is no friction of the rolling element on the spiral-shaped guide represented by a first and a second spiral-shaped guide (2, 3) while the bearings (9) are easier to manufacture.

Specifically, in both embodiments, the carriage comprises a support (7) for supporting the set of rolling elements (6) configured such that it allows all the rolling elements (6) to contact the spiral-shaped guide (2, 3) when rolling. For that reason the mentioned support (7) comprises an arquated shape.

In the shown figures, the set of rolling elements (6) comprises three rolling elements, i.e., three balls (8) or three bearings (9) that roll around a perpendicular axis to the axis of the shaft (1).

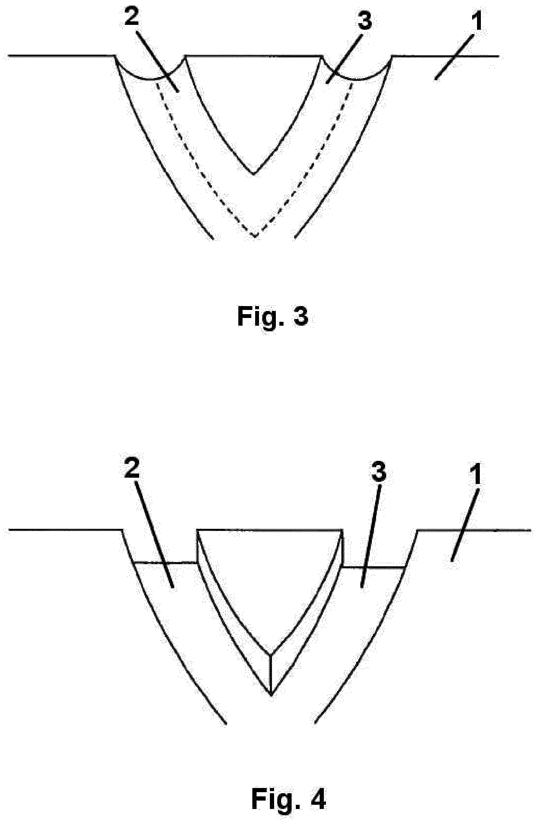

The design of the cross-section of the spiral-shaped guide (2, 3) of the shaft (1) changes depending on the set of rolling elements (6). The balls (8) require a semicircular guide (2, 3), as can be seen in figure 3, and the bearings (9) require a rectangular shape guide (2, 3) as can be seen in figure 4.

According to the present invention, the carriage comprises a rod (10) located perpendicular to the support (7), being the rod (10) and the support (7) configured such the support (7) is rotatable around the longitudinal axis of the rod (10). This rod (10) allows the turn of the support (7) and hence of the set of rolling elements (6) when the spiral (2, 3) reaches the end of the shaft (1) and therefore of the first or second spiral-shaped guide (2, 3) and it has to enter the other spiral-shaped guide (2, 3).

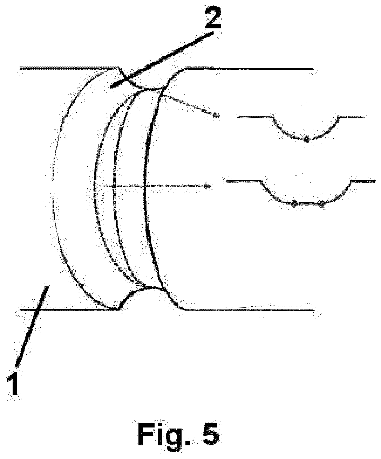

On both sides of the shaft (1), in the transition between both spirals , represented by the first and second spiral-shaped guide (2, 3), the guide (2, 3) is modified to allow the movement of the set of rolling elements (6). This is achieved by progressively widening the cross-section of the guide (2, 3) at the meeting point of both spirals (2, 3) as can be seen in figure 5.

## Claims

1. Frictionless service carriage system for lateral hose guidance, comprising:
- a shaft (1) comprising a first (2) and a second (3) spiral-shaped guide in its surface, each spiral-shaped guide (2, 3) configured to define a linear movement along the longitudinal axis of the shaft (1) of a carriage (4) in opposite directions and both spiral-shaped guides (2, 3) crossing each other (2, 3) along the longitudinal axis of the shaft (1),
- the carriage (4) comprising a movable element (5) configured to be located into a guide comprising said spiral-shaped guides (2, 3) and movable along it (2, 3),the movable element (5) comprising a set of rolling elements (6) configured to roll one behind the other along the first or second spiral-shaped guide (2, 3) of the shaft (1) and configured such that in a crossing with the other of the first or second spiral-shaped guide (2, 3), the set of rolling elements (6) has at least two contact points with the spiral-shaped guide (2, 3) for which it rolls,
- the carriage (4) comprising a support (7) for supporting the set of rolling elements (6) configured such that it allows all the rolling elements (6) to be in contact with the spiral-shaped guides (2, 3) when rolling,
**characterized in that** the carriage (4) comprises a rod (10) located perpendicular to the support (7), the rod (10) and the support (7) being configured such that the support (7) is rotatable around the longitudinal axis of the rod (10).

2. Frictionless service carriage system, according to any preceding claim, wherein the set of rolling elements (6) comprises three rolling elements.

3. Frictionless service carriage system, according to claim 2, wherein the three rolling elements (6) are balls (8).

4. Frictionless service carriage system, according to claim 3, wherein the cross-section of the spiral-shaped guides (2, 3) is semicircular.

5. Frictionless service carriage system, according to claim 2, wherein the three rolling elements are bearings (9) having a cylindrical shape.

6. Frictionless service carriage system, according to claim 5, wherein the cross-section of the spiral-shaped guides (2, 3) is rectangular.

7. Frictionless service carriage system, according to any preceding claim, wherein both spiral-shaped guides (2, 3) are joined at the end of the shaft with a progressively widening of the cross-section of the guide (2, 3).

## Patentansprüche

1. Reibungsloses Servicewagensystem zur lateralen Schlauchführung, das Folgendes umfasst:
- eine Welle (1), die eine erste (2) und eine zweite (3) spiralförmige Führung in ihrer Oberfläche umfasst, wobei jede spiralförmige Führung (2, 3) dazu konfiguriert ist, eine Linearbewegung entlang der Längsachse der Welle (1) eines Wagens (4) in entgegengesetzten Richtungen zu definieren, und beide spiralförmigen Führungen (2, 3) einander (2, 3) entlang der Längsachse der Welle (1) überkreuzen,
- wobei der Wagen (4) ein bewegliches Element (5) umfasst, das zur Positionierung in einer Führung, die die spiralförmigen Führungen (2, 3) umfasst, und zur Bewegbarkeit entlang dieser (2, 3) konfiguriert ist, wobei das bewegliche Element (5) einen Satz Rollelemente (6) umfasst, die dazu konfiguriert sind, hintereinander entlang der ersten oder der zweiten spiralförmigen Führung (2, 3) der Welle (1) zu rollen, und derart konfiguriert sind, dass bei einer Überkreuzung mit der jeweils anderen spiralförmigen Führung (2, 3) - der ersten oder der zweiten - der Satz von Rollelementen (6) mindestens zwei Kontaktpunkte mit der spiralförmigen Führung (2, 3), für die er rollt, aufweist,
- wobei der Wagen (4) eine Stütze (7) zum Stützen des Satzes von Rollelementen (6) umfasst, die derart konfiguriert ist, dass sie gestattet, dass alle Rollelemente (6) beim Rollen mit den spiralförmigen Führungen (2, 3) in Kontakt sind,
**dadurch gekennzeichnet, dass** der Wagen (4) eine Stange (10) umfasst, die senkrecht zur Stütze (7) positioniert ist, wobei die Stange (10) und die Stütze (7) derart konfiguriert sind, dass die Stütze (7) um die Längsachse der Stange (10) herum drehbar ist.

2. Reibungsloses Servicewagensystem nach einem vorhergehenden Anspruch, wobei der Satz von Rollelementen (6) drei Rollelemente umfasst.

3. Reibungsloses Servicewagensystem nach Anspruch 2, wobei die drei Rollelemente (6) Kugeln (8) sind.

4. Reibungsloses Servicewagensystem nach Anspruch 3, wobei der Querschnitt der spiralförmigen Führungen (2, 3) halbkreisförmig ist.

5. Reibungsloses Servicewagensystem nach Anspruch 2, wobei die drei Rollelemente Lager (9) mit einer zylindrischen Form sind.

6. Reibungsloses Servicewagensystem nach Anspruch 5, wobei der Querschnitt der spiralförmigen Führungen (2, 3) rechteckig ist.

7. Reibungsloses Servicewagensystem nach einem vorhergehenden Anspruch, wobei beide spiralförmigen Führungen (2, 3) an dem Ende der Welle mit einer zunehmenden Aufweitung des Querschnitts der Führung (2, 3) verbunden sind.

## Revendications

1. Système de chariot de service sans frottement pour guidage latéral de tuyau, comprenant :
- un arbre (1) comprenant un premier (2) et un second (3) guide spiralé dans sa surface, chaque guide spiralé (2, 3) étant conçu pour définir un mouvement linéaire le long de l'axe longitudinal de l'arbre (1) d'un chariot (4) dans des directions opposées et les deux guides spiralés (2, 3) se croisant l'un l'autre (2, 3) le long de l'axe longitudinal de l'arbre (1),
- le chariot (4) comprenant un élément mobile (5) conçu pour être placé dans un guide comprenant lesdits guides spiralés (2, 3) et mobile le long de celui-ci (2, 3), l'élément mobile (5) comprenant un ensemble d'éléments roulants (6) conçus pour rouler l'un derrière l'autre le long du premier ou second guide spiralé (2, 3) de l'arbre (1) et conçus de telle sorte qu'au niveau d'un croisement avec l'autre des premier et second guides spiralés (2, 3), l'ensemble d'éléments roulants (6) a au moins deux points de contact avec le guide spiralé (2, 3) dans lequel il roule,
- le chariot (4) comprenant un support (7) servant à supporter l'ensemble d'éléments roulants (6) conçu de telle sorte qu'il permet à tous les éléments roulants (6) d'être en contact avec les guides spiralés (2, 3) lorsqu'ils roulent,
**caractérisé en ce que** le chariot (4) comprend une tige (10) positionnée perpendiculairement au support (7), la tige (10) et le support (7) étant conçus de telle sorte que le support (7) soit rotatif autour de l'axe longitudinal de la tige (10).

2. Système de chariot de service sans frottement selon une quelconque revendication précédente, dans lequel l'ensemble d'éléments roulants (6) comprend trois éléments roulants.

3. Système de chariot de service sans frottement selon la revendication 2, dans lequel les trois éléments roulants (6) sont des billes (8).

4. Système de chariot de service sans frottement selon la revendication 3, dans lequel la section transversale des guides spiralés (2, 3) est semi-circulaire.

5. Système de chariot de service sans frottement selon la revendication 2, dans lequel les trois éléments roulants sont des paliers (9) de forme cylindrique.

6. Système de chariot de service sans frottement selon la revendication 5, dans lequel la section transversale des guides spiralés (2, 3) est rectangulaire.

7. Système de chariot de service sans frottement selon l'une quelconque des revendications précédentes, dans lequel les deux guides spiralés (2, 3) se rejoignent à l'extrémité de l'arbre avec un élargissement progressif de la section transversale du guide (2, 3).
